(19) Europäisches Patentamt
European Patent Office
Office européen des brevets

(11) **EP 3 619 802 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **18722959.6**

(22) Anmeldetag: **03.05.2018**

(51) Int Cl.:
***H02M 1/32*** *(2007.01)*

(86) Internationale Anmeldenummer:
**PCT/EP2018/061339**

(87) Internationale Veröffentlichungsnummer:
**WO 2018/202772 (08.11.2018 Gazette 2018/45)**

(54) **WINDENERGIEANLAGE MIT ÜBERLASTFÄHIGEM UMRICHTERSYSTEM**

WIND TURBINE WITH OVERLOAD-CAPABLE CONVERTER SYSTEM

ÉOLIENNE COMPRENANT UN SYSTÈME CONVERTISSEUR RÉSISTANT AUX SURCHARGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2017 DE 102017109728**

(43) Veröffentlichungstag der Anmeldung:
**11.03.2020 Patentblatt 2020/11**

(73) Patentinhaber: **Wobben Properties GmbH**
**26607 Aurich (DE)**

(72) Erfinder: **BROMBACH, Johannes**
**13437 Berlin (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 1 107 416       EP-A2- 2 530 816**
**WO-A1-2005/027301    US-A1- 2015 138 852**

**Beschreibung**

Die vorliegende Erfindung betrifft ein Verfahren zum Betreiben eines Umrichtersystems einer Windenergieanlage. Die vorliegende Erfindung betrifft auch eine ein Umrichtersystem aufweisende Windenergieanlage. Die vorliegende Erfindung betrifft auch einen Wind park.

Es war bisher üblich, dass eine Topologie eines elektrischen Versorgungsnetzes darauf ausgelegt ist, dass Großerzeuger wie Kohle-, Gas- oder Kernkraftwerke große Leistungsmengen in das elektrische Versorgungsnetz einspeisen und ebenfalls den Großteil der Netzstabilisierung durchführen. Durch einen zunehmenden Anteil erneuerbarer Energien kann sich auch diese Netztopologie verändern, so dass erneuerbare Energien, die meist als dezentrale Erzeuger fungieren, stärker netzstützende Aufgaben übernehmen.

Dabei kann hinzukommen, dass Netzbetreiber Vorschriften dazu erlassen, wie dezentrale Erzeuger auf bestimmte Netzereignisse wie Netzfehler oder Über-/Unterlasten dynamisch reagieren sollen.

Dabei kann es auch vorkommen, dass ein dezentraler Erzeuger wie eine Windenergieanlage, auch kurzzeitig einen erhöhten Strom einspeisen muss, besonders in einer Überlastsituation wie bei einem Kurzschluss im elektrischen Versorgungsnetz.

Ebenfalls können Überlastsituationen durch transiente Lastzuschaltungen im elektrischen Versorgungsnetz oder durch Zuschalten von Transformatoren (Transformator-Inrush) im elektrischen Versorgungsnetz entstehen, die ebenfalls Auswirkungen auf die dezentralen Energieerzeuger haben können.

Durch solche Überlastsituationen besteht dann die Gefahr, dass der dezentrale Erzeuger, besonders sein Umrichtersystem, mit dem er in das elektrische Versorgungsnetz einspeist, durch einen zu hohen Strom bzw. eine zu hohe Leistung, gefährdet wird. Entsprechend ist der einzuspeisende Strom eines solchen Umrichtersystems meist begrenzt.

Dabei kann es aber gewünscht sein, dass die dezentralen Energieerzeuger zunehmend auch dann zur Einspeisung genutzt werden können, wenn eine Überlastsituation im elektrischen Versorgungsnetz vorliegt und diese nicht aus Eigenschutz sofort begrenzt werden oder diese in einer Überlastsituation nicht vom Netz abgekoppelt werden müssen.

Nachteilig an Umrichtersystemen ist nämlich, dass diese meist nur dazu vorbereitet sind, eine festgelegte - und mit einer Sicherheitsmarge versehene - maximale Leistung, meist die Nennleistung, im Dauerbetrieb einspeisen zu können, da sonst das Risiko einer Überhitzung an Komponenten des Umrichtersystems besteht, wenn zusätzliche Leistung mit dem Umrichtersystem eingespeist werden soll.

Das Deutsche Patent- und Markenamt hat in der Prioritätsanmeldung zur vorliegenden Anmeldung folgenden Stand der Technik recherchiert: DE 10 2006 027 465 A1; DE 10 2008 003 299 A1; US 2013/0026841 A1; WO 2010/079235 A2 und CN 104 578 821 A.

Weiterer Stand der Technik ist: WO 2005/027301 A1, US 2015/138852 A1, EP 1 107 416 A1 und EP 2 530 816 A2.

Diese Druckschriften behandeln ebenfalls die Thematik zum Betreiben eines Umrichtersystems während eines Überlastbetriebsmodus.

Aufgabe der vorliegenden Erfindung ist es somit, zumindest eines der oben genannten Probleme zu adressieren. Insbesondere soll eine Lösung vorgeschlagen werden, die zumindest eine kurzzeitige Erhöhung eines eingespeisten Stroms bzw. einer eingespeisten Leistung ermöglicht. Zumindest soll zu bisher bekannten Lösungen eine alternative Lösung vorgeschlagen werden.

Erfindungsgemäß wird somit ein Verfahren nach Anspruch 1 vorgeschlagen. Dieses ist zum Betreiben eines Umrichtersystems in einer Windenergieanlage zum Austauschen elektrischer Leistung mit einem elektrischen Versorgungsnetz an einem Netzanschlusspunkt vorgesehen. Dazu umfasst die Windenergieanlage das Umrichtersystem. Das Umrichtersystem kann bspw. einen oder mehrere Wechselrichter umfassen, die einen elektrischen Wechselstrom erzeugen, und in das elektrische Versorgungsnetz einspeisen. Es können auch Situationen auftreten, in denen, zumindest kurzfristig, das Umrichtersystem Leistung aus dem elektrischen Versorgungsnetz aufnimmt, so dass generell vom Austauschen elektrischer Leistung mit dem elektrischen Versorgungsnetz gesprochen wird.

Der Wechselrichter ist somit dazu eingerichtet, an seinem Wechselrichterausgang einen Wechselrichterstrom, insbesondere einen mehrphasigen Wechselstrom, bereitzustellen bzw. abgeben zu können. Die aus dem Wind erzeugte elektrische Leistung in Form des Wechselrichterstroms kann somit in das elektrische Versorgungsnetz an dem Netzanschlusspunkt eingespeist werden, der auch allgemein als PCC (engl.: Point of Common Coupling) bezeichnet wird.

Es wird somit in einem ersten Schritt das Umrichtersystem in einem Normalbetriebsmodus betrieben. Dabei erzeugt der Wechselrichter aus der vom Generator erzeugten Leistung oder einem Teil davon, einen elektrischen Wechselstrom, um diesen in das elektrische Versorgungsnetz einzuspeisen.

Der elektrische Wechselrichter ist hierfür bevorzugt dreiphasig ausgebildet und weist zum Erzeugen des elektrischen Wechselrichterstromes wenigstens einen Ober- und einen Unterschalter für jede der drei Phasen auf. Die Schalter des Wechselrichters können dabei beispielsweise über ein Toleranzband- oder ein Pulsweitenmodulationsverfahren angesteuert werden, um den Wechselrichterstrom zu erzeugen bzw. diesen am Wechselrichterausgang bereitzustellen.

Ferner kann das Umrichtersystem im Normalbetriebsmodus dauerhaft betrieben werden, ohne dass eine thermische Überhitzung an einer Komponente des Umrichtersystems auftritt. Der Normalbetriebsmodus kann dabei auch als Nennbetrieb in einem Nennarbeitspunkt verstanden werden.

Im Normalbetriebsmodus wird davon ausgegangen, dass keine für das Umrichtersystem relevante Überlastsituation vorliegt, weder am Umrichtersystem, noch im elektrischen Versorgungsnetz.

Es wird dann in einem weiteren Schritt eine das Umrichtersystem betreffende Überlastsituationen erfasst. Die Situation ändert sich also. Das Umrichtersystem befindet sich dabei zunächst weiterhin im Normalbetriebsmodus und erfasst bzw. überwacht festgelegte Mess- oder Signalgrößen bzw. -eingänge, die später noch genauer beschrieben werden. Bspw. kann anhand festgelegter Grenzwerte bzw. anderer vorbestimmter Kriterien die im Betrieb des Umrichtersystems generellen kontinuierlich erfasst werden, eine Überlastsituation erkannt bzw. detektiert werden.

Da Überlastsituationen - wie bereits eingangs beschrieben - aus diversen Gründen entstehen können, müssen demnach allgemeingültige Kriterien aus Sicht des Umrichters festgelegt werden, um Überlastsituationen erkennen zu können, und/oder es kann gezielt auf unterschiedliche Kriterien geprüft werden, um unterschiedliche Überlastsituationen erfassen zu können. Dabei sind Beispiele für eine Überlastsituation, eine kurzzeitige Stromerhöhung aufgrund einer Transformatorzuschaltung (Inrush-Effekt), eine starke Spannungsschwankung im Netz durch eine transiente Lastzu- und/oder Lastabschaltung. Ferner kann auch ein Netzbetreiber dazu auffordern den Umrichter in den Überlastmodus umzuschalten, wenn beispielweise kurzzeitig eine erhöhte Leistung durch das Umrichtersystem in einem Fehlerfall, wie einem Kurzschluss im Netz, bereitgestellt werden soll.

Wird nun zu einem beliebigen Zeitpunkt im Normalbetrieb eine Überlastsituation erkannt, schaltet das Umrichtersystem in einem weiteren Verfahrensschritt in den Überlastbetriebsmodus um. In diesem Überlastbetriebsmodus ist das Umrichtersystem somit auf einen Betrieb bei Überlast eingerichtet. Besonders Überströme, die normalerweise zu vermeiden sind, die bspw. bis 10% oder mehr über einen Nennstrom des Wechselrichtersystems hinaus gehen, sind nun zugelassen.

Für den Überlastbetriebsmodus wird vorgeschlagen, dass eine mittlere Schaltfrequenz zum Erzeugen eines Ausgangsstromes reduziert wird. Ein Umrichter formt einen Strom oder eine Spannung durch Schalthandlungen von Leistungsschaltern, wobei die Schalthandlungen eine mittlere Schaltfrequenz aufweisen. Diese mittlere Schaltfrequenz wird für den Überlastbetriebsmodus reduziert.

Zusätzlich oder alternativ wird vorgeschlagen im Überlastbetriebsmodus des Umrichtersystems für eine vorbestimmte maximale Überlastdauer eine höhere Belastung am Umrichtersystem zugelassen, insbesondere eine erhöhte Temperatur und/oder einen erhöhten Ausgangsstrom zuzulassen. Es wurde erkannt, dass eine solche erhöhte Belastung hinnehmbar ist und die betroffenen Bauteile nicht beschädigt werden, wenn diese erhöhte Belastung nur für einen kurzen Zeitraum zugelassen wird. Als maximale Überlastdauer wird vorzugsweise ein Wert bis 30 Sekunden, vorzugsweise bis 10 Sekunden und insbesondere bis 5 Sekunden vorgeschlagen.

Somit kann besonders an einem Leistungstransistor für einen kurzen Zeitraum eine Übertemperatur zugelassen werden. Die Übertemperatur beschreibt dabei eine Temperatur bei der bereits Degradationseffekte, also Alterungseffekte, im Transistor auftreten bzw. auftreten können. Zum Zulassen einer erhöhten Temperatur wird vorzugsweise eine erhöhte Temperaturgrenze vorgegeben. Zum Begrenzen eines erhöhten Ausgangsstromes wird vorzugsweise eine erhöhte Stromobergrenze für den Ausgangsstrom vorgegeben. Dadurch ist der Umrichter dazu vorbereitet einen größeren Ausgangsstrom am Umrichterausgang zuzulassen der über einem maximalen Ausgangsstrom im Normalbetriebsmodus liegt.

Es wurde erkannt, dass starke netzbedingte Überlastsituationen relativ selten auftreten. Häufig dauern sie nur wenige 10ms an, in Ausnahmesituationen kann diese Zeit aber auch länger sein. Dabei bestimmen die thermische Vorbelastung, die thermische Kapazität und der thermische Widerstand der Leistungsschalter die Überlastfähigkeit des Umrichtersystems häufig maßgeblich mit. Darüber hinaus wurde ebenfalls erkannt, dass sonstige stromführende Komponenten in dem Umrichtersystem im Vergleich zu den Leistungsschaltern bei einer netzstützenden Überlasteinspeisung thermisch kaum belastet werden.

Durch die Reduzierung der mittleren Schaltfrequenz des Umrichtersystems werden dabei temporär im Überlastbetriebsmodus gegenüber dem Normalbetriebsmodus die sogenannten Schaltverluste gesenkt. Dabei liegt insgesamt ein proportionaler Zusammenhang der Schaltverluste zur Schaltfrequenz der im Umrichtersystem befindlichen Leistungshalbleiter nach folgendem Zusammenhang vor:

$$P_{sw} = f_{sw} \cdot (E_{on}(V_{ZK}, I_{out}, T_j) + E_{off}(V_{ZK}, I_{out}, T_j)) \qquad (1)$$

mit

$P_{SW}$ = Schaltverluste

$E_{on}$ = Einschaltverluste

$V_{ZK}$ = Eingangsspannung (Zwischenkreisspannung)

$f_{SW}$ = Schaltfrequenz

$E_{off}$ = Ausschaltverluste

$I_{out}$ = Ausgangsstrom

$T_j$ = Sperrschichttemperatur (Junction Temperature)

Wie anhand der Formel (1) erkennbar ist, sind für die gesamten Schaltverluste die Frequenz, die Spannung sowie der Ausgangsstrom maßgeblich. Werden $V_{ZK}$ und $I_{out}$ konstant gehalten und die Schaltfrequenz reduziert, sinken dementsprechend auch die Schaltverluste. Im Gegenzug steigen jedoch durch die reduzierte Schaltfrequenz auch die sogenannten Durchlassverluste, die aber nicht so stark ansteigen, wie die Schaltverluste bei einer Frequenzreduzierung absinken. Demnach erwärmen sich die Leistungstransistoren mit einer reduzierten Schaltfrequenz weniger, wenn $V_{ZK}$ und $I_{out}$ konstant gehalten werden. Somit kann durch eine geeignete Auswahl der Schaltfrequenz eine zusätzliche erhöhte Leistung bzw. ein erhöhter Ausgangsstrom eingespeist werden, da die Leistungstransistoren im Mittel weniger häufig geschaltet werden und sich somit langsamer erhitzen.

Es wurde erkannt, dass in einer Überlastsituation bei der kurzzeitig ein höherer Strom an das elektrische Versorgungsnetz bereitgestellt werde muss, ein stärker verzerrter sinusförmiger Strom eingespeist werden kann, weil es in der Situation vielmehr darauf ankommt, besonders viel Leistung einzuspeisen. Einen stark oberwellenbehafteten Strom in diesem Netzfehlerfall einzuspeisen kann dann ausreichend sein.

Das erfindungsgemäße Verfahren ermöglicht es somit, dass das Umrichtersystem in einer Überlastsituation kurzzeitig eine Überleistung einspeisen kann.

Durch die Verwendung der geringeren Schaltfrequenz werden weniger Schaltverluste erzeugt und dadurch kann der Umrichter länger in einer Überlastsituation betreiben werden. Demnach kann das vorliegende Umrichtersystem länger in einer Überlastsituation betrieben werden als konventionelle Umrichtersysteme und dadurch ggf. kurzzeitig eine erhöhte Leistung an das elektrische Versorgungsnetz bereitstellen.

Vorzugsweise wird im elektrischen Umrichtersystem die mittlere Schaltfrequenz für eine festgelegte und maximale Überlastdauer reduziert. Um zu vermeiden, dass das Umrichtersystem im Überlastbetriebsmodus im Vergleich zum Normalbetriebsmodus dauerhaft betrieben wird, wird vorgeschlagen, eine maximale Überlastdauer festzulegen, was synonym zu der bereits genannten vorbestimmten maximalen Überlastdauer ist.

Die maximale Überlastdauer kann in Abhängigkeit der thermischen Eigenschaften und außerdem oder alternativ in Abhängigkeit der thermischen Vorbelastung des Umrichtersystems festgelegt werden. Es kommt auch in Betracht, Komponenten des Umrichtersystems dafür zugrundezulegen, besonders die zum Formen des Stromes oder der Spannung verwendeten Halbleiterschalter.

Die thermischen Eigenschaften betreffen besonders thermische Materialeigenschaften, wie beispielsweise die maximale Wärmekapazität bzw. die maximale Betriebstemperatur der betreffenden Komponente. Das kann z.B. die maximale Sperrschichttemperatur $T_j$ des Leistungstransistors sein. Auch die Wärmeleitfähigkeit bzw. ein thermischer Widerstand kommen in Betracht. Dabei legen die thermischen Eigenschaften fest, wie lange das Umrichtersystem im Überlastbetriebsmodus betrieben werden kann.

Zudem ist für die maximale Überlastdauer auch der anliegende Strom am Umrichtersystem maßgeblich. Zur Bestimmung einer maximal zu erlaubenden Überlast kann ein $i^2 \cdot t$-Wert betrachtet werden, der synonym auch als Grenzlastintegral bezeichnet werden kann. Er gibt eine Grenze für die Belastung vor und diese Grenze setzt sich aus dem Strom Überstrom i und der Zeitdauer t, für die dieser Überstrom auftritt, zusammen. Die so vorgegebene Grenze wird eingehalten, wenn das Quadrat des Überstroms i, integriert über die Zeitdauer den vorgegebenen Wert nicht überschreitet. Verdoppelt sich bspw. der Überstrom, kann nur für ein Viertel der Zeitdauer zugelassen werden. Ebenso lässt sich auch aus einem bekannten oder zu erwartenden Überstrom die maximale Zeitdauer berechnen. Wenn eine maximale Zeitdauer bekannt ist, für die ein Überstrom auftreten kann, kann die maximale Stromhöhe berechnet werden.

Insbesondere werden im Überlastbetriebsmodus gewollt relative Temperaturgrenzen überschritten, bei denen bereits Degradationseffekte in den Komponenten, wie beispielsweise Leistungstransistoren, in Kauf genommen werden. Dazu wurde erkannt, dass Überlastsituationen nur relativ selten auftreten, und daher wirken sich die Degradationserscheinungen nur wenig auf die maximale Lebensdauer der Komponenten des Umrichtersystems aus.

Neben den thermischen Eigenschaften wird auch vorgeschlagen, die thermische Vorbelastung des Umrichtersystems bei der Festlegung der maximalen Überlastdauer zusätzlich oder alternativ zu berücksichtigen. Eine thermische Vorbelastung des Umrichtersystems kann die aktuelle Temperatur zu dem Zeitpunkt sein, an dem eine Überlastsituation auftritt. Folglich kann ein Umrichtersystem mit einer geringeren Temperatur zum Zeitpunkt, an dem eine Überlastsituation erfasst wurde, länger im Überlastbetriebsmodus betrieben werden als ein wärmeres Umrichtersystem mit einer höheren Temperatur. Es wurde nämlich erkannt, dass ein kühleres Umrichtersystem in seiner Wärmekapazität noch mehr Wärme in Form von Energie aufnehmen kann als wenn es bereits eine hohe Temperatur aufweist, also schon viel Wärme gespeichert hat.

Es berücksichtigt das Umrichtersystem somit gemäß einer Ausführungsfunktion die thermischen Eigenschaften sowie die thermische Vorbelastung von im Umrichtersystem vorhandenen Komponenten und ermöglicht somit, die thermischen Kapazitäten in einer Überlastsituation möglichst effektiv und möglichst maximal ausnutzen zu können.

Demnach wird ein Umrichtersystem vorgeschlagen, das eine temperaturgeführte bzw. temperaturabhängige mittlere Schaltfrequenz aufweist.

Komponenten des Umrichtersystems können aber auch alle Komponenten im Umrichtersystem sein, die sich erwärmen und überhitzen können. Dazu gehören Komponenten wie Drosseln, Schalter, Netzteile, Kühlkörper, Spulen und Gleichrichtmittel, um nur einige Beispiele zu nennen.

Vorzugsweise wird das Erfassen einer Überlastsituation mittels einer Strommessung, einer Temperaturmessung oder einer Spannungsmessung durchgeführt. Eine Kombination der Messverfahren ist dabei als eine Variante ebenfalls vorgesehen.

Dabei wird die Strommessung vorzugsweise am Ausgang des Umrichtersystems vorgenommen, besonders wenn dieser Messwert für die Regelung des Umrichtersystems ohnehin erfasst wird und somit eine zusätzliche Strommessstrecke entfallen kann.

Die Temperaturmessung wird vorzugsweise an einem Kühlkörper oder direkt an einer stromführenden Komponente des Umrichters vorgenommen, wie beispielsweise direkt an einem Leistungstransistor. Ein Kühlkörper ist zum Messen besonders gut zugänglich, wohingegen eine Messung an einer stromführenden Komponente eine Messung unmittelbar dort ermöglicht, wo auch eine Überhitzung auftreten kann.

Ebenfalls kann eine Überlastsituation mittels einer Spannungsmessung bestimmt werden, die vorzugsweise an einem Zwischenkreis des Umrichtersystems oder auch direkt am elektrischen Versorgungsnetz erfolgen kann. Dabei wird bei einer Spannungsmessung an einem Zwischenkreis des Umrichtersystems folglich eine Gleichspannungsmessung durchgeführt, wobei dort insbesondere eine Spannungsamplitude einen Rückschluss auf eine Überlastsituation zulässt. Bei einer Spannungsmessung am elektrischen Versorgungsnetz oder im elektrischen Parknetz hingegen, kann neben der Amplitude der Netzspannung auch die Frequenz der Netzspannung gemessen werden.

Hierbei werden bevorzugt jeweils mehrere Mess- und Betriebsparameter erfasst, da eine Überlastsituation in unterschiedlicher Art und Weise auf ein Umrichtersystem wirken kann.

Wird für das Erfassen einer Überlastsituation eine Temperaturmessung durchgeführt, kann mit der erfassten Temperatur auch allgemein der thermische Zustand des Umrichtersystems bewertet werden.

Gemäß einer Ausführungsform wird vorgeschlagen, dass zwischen dem Normalbetriebsmodus und dem Überlastbetriebsmodus umgeschaltet wird in Abhängigkeit wenigstens eines Kriteriums aus der Liste aufweisend:

- Ein Überschreiten einer festgelegten Grenztemperatur an einer stromführenden Komponente des Umrichtersystems;

- ein Überschreiten eines festgelegten Grenzstromes am Ausgang des Umrichtersystems;

- ein Überschreiten einer festgelegten Grenzspannung im Umrichtersystem;

- ein Überschreiten eines festgelegten Spannungsbereichs im elektrischen Versorgungsnetz, wenn das Umrichtersystem im Normalbetriebsmodus innerhalb des Spannungsbereiches betrieben wird;

- ein Überschreiten eines festgelegten Frequenzbereiches der Spannung im elektrischen Versorgungsnetz, wenn das Umrichtersystem im Normalbetriebsmodus innerhalb des Frequenzbereiches betrieben wird;

- eine Aufforderung, eine höhere Leistungsabgabe vorzunehmen, die durch ein externes Signal vorgegeben wird.

Das Überschreiten einer festgelegten Grenztemperatur an einer stromführenden Komponente des Umrichters bezieht sich gemäß der vorgeschlagenen Ausführungsform besonders auf eine Temperaturmessung an einer Komponente des Umrichtersystems. Diese wird beispielsweise mit einem geeigneten Temperatursensor wie einem PT100 vorgenommen und insbesondere an den Komponenten gemessen, die sich besonders schnell in einer Überlastsituation erhitzen. Eine geeignete Temperaturmessstelle wäre demnach beispielsweise auf einem Kühlkörper eines Leistungstransistors.

Das Überschreiten eines festgelegten Grenzstromes am Ausgang des Umrichtersystems bezieht sich vorzugsweise auf die zuvor genannte Strommessung, die am Ausgang des Umrichtersystems durchgeführt werden kann.

Es wurde erkannt, dass eine Strommessung am Ausgang des Umrichtersystems besonders vorteilhaft ist, da dieser Messwert ohnehin in vielen modernen Umrichtersystemen für die vorhandene Regelung der Leistungstransistoren notwendig ist.

Ein weiteres Kriterium, um eine Überlastsituation zu erfassen ist, das Umrichtersystem im Normalbetriebsmodus innerhalb eines festgelegten Spannungsbereichs zu betreiben und eine obere und untere Spannungsgrenze festzulegen. Verlässt die aktuelle gemessene Spannung diesen festgelegten Spannungsbereich, fasst das Umrichtersystem dies als Überlastsituation auf und schaltet in den Überlastbetriebsmodus um. Die Spannungsbereiche können dabei sowohl für den Zwischenkreis des Umrichtersystems festgelegt werden, wie auch für eine Amplitudenmessung der Netzspannung.

Neben dem festgelegten Spannungsbereich ist ein weiteres mögliches Kriterium ein festgelegter Frequenzbereich der Spannung im elektrischen Versorgungsnetz, wobei auch hier eine Überlastsituation erkannt wird, wenn der aktuelle gemessene Frequenzwert der Netzspannung den festgelegten Frequenzbereich verlässt, wobei der Umrichter erneut im Normalbetriebsmodus innerhalb dieses Frequenzbereiches betrieben wird. Eine solche Frequenzmessung kann auch eine Überlastsituation antizipieren, wenn sie ein Frequenzverhalten erfasst, dass ein Verhalten des Umrichters auslöst, das wiederum zu einer Überlastsituation führt.

Ein weiteres Kriterium zum Erkennen einer Überlastsituation kann eine Aufforderung sein, eine höhere Leistungsabgabe vorzunehmen. Beispielsweise kann diese Aufforderung durch ein externes Signal an das Umrichtersystem übermittelt werden. Eine Überlastsituation muss dabei nicht zwangsläufig messtechnisch im Umrichtersystem bestimmt werden, sondern es kann auch der Fall eintreten, dass ein Netzbetreiber dazu auffordert, aufgrund eines Netzfehlers eine erhöhte Leistungsabgabe bereitzustellen, obwohl der Wechselrichter bereits an einer Obergrenze des Normalbetriebsmodus betrieben wird, und somit bereits die maximale Leistungsabgabe in einem Dauerbetrieb abgibt. Ganz generell kann das externe Signal von einer beliebigen Reglerstruktur oder auch manuell aus einer Betriebszentrale vorgegeben werden, wenn beispielsweise eine Überlastsituation erwartet wird, diese aber noch nicht eingetreten ist.

Es können somit thermische Reserven zum Beispiel in Form von höheren Temperaturgrenzen freigegeben werden, obwohl eine Überlastsituation unter Umständen noch nicht eingetreten ist.

Vorzugsweise wird gemäß einer weiteren Ausführungsform eine Strombegrenzung vorgenommen, wenn eine maximale Überlastdauer oder ein vorgegebener i2t-Wert bzw. ein vorgegebener Maximalwert für ein Grenzlastintegral erreicht wird.

Es wird somit vorgeschlagen, dass der Überlastbetriebsmodus nicht dauerhaft vorliegen soll, da es sonst zu thermischen Schäden und starken Degradationserscheinungen kommen kann. Um dieser thermischen Überlastung zu begegnen, wird demnach vorgeschlagen, eine Strombegrenzung des Umrichtersystems vorzunehmen, wenn eine maximale Überlastdauer erreicht wird, wobei die Strombegrenzung insbesondere derart festgelegt wird, dass sich die stromführenden Komponenten des Umrichtersystems die sich erwärmt haben, nicht mehr weiter erwärmen bzw. sogar wieder abkühlen.

Demnach weist das Umrichtersystem eine Strombegrenzung auf, die erst eingeschaltet wird, wenn ein bestimmter absolut festgelegter Temperaturgrenzwert erreicht wird, der über einem relativen Temperaturgrenzwert im Normalbetriebsmodus liegt. Somit kann das Umrichtersystem in vorteilhafter Weise die thermischen Wärmekapazitäten der Komponenten möglichst weit ausreizen, verhindert jedoch eine völlige Überhitzung.

In einer weiteren Ausführungsform des erfindungsgemäßen Verfahrens wird vorgeschlagen, wieder zurück in den Normalbetriebsmodus umzuschalten, wenn die Überlastsituation nicht mehr erfasst bzw. erkannt wird.

Somit ermöglicht das Umrichtersystem eine automatische Rückschaltung in den Normalbetriebsmodus und Dauerbetrieb. Besonders wird dadurch ein Zustand, in dem mit stärker verzerrtem Strom eingespeist wird, zeitlich möglichst kurz gehalten.

Gemäß einer Ausführungsform wird zudem vorgeschlagen, dass die maximale Überlastdauer, die auch als Überlastbetriebsdauer bezeichnet werden kann, also die Zeit, in der sich das Umrichtersystem in einem Überlastbetriebsmodus befinden darf, anhand der thermischen Vorbelastung des Umrichtersystems festgelegt wird. Als thermische Vorbelastung kann dabei die Betriebstemperatur verwendet werden, die zum Zeitpunkt der erfassten Überlastsituation in einer Komponente des Umrichtersystems anliegt. In einer zweiten Variante kann die maximale Überlastdauer ebenfalls anhand eines prozentualen Ausgangsstromwertes in Bezug auf einen Nennausgangsstrom des Umrichters bestimmt werden. Demnach kann ein Umrichtersystem, das beispielsweise mit 25% der Nennleistung in einem Dauerbetrieb betrieben wurde, länger in einem Überlastbetriebsmodus betrieben werden, als ein Umrichtersystem, das zuvor beispielsweise bei 90% des Ausgangsstromnennwertes betrieben wurde.

Das Umrichtersystem kann somit die thermische Vorbelastung nicht nur anhand einer Temperaturmessung bestimmen, sondern auch aufgrund der Erkenntnis des zuvor eingespeisten Stromnennwertes. Darauf basierend kann die maximale Überlastdauer bestimmt werden.

Vorzugsweise wird das Umrichtersystem mit einer erhöhten Leistungsabgabe bei einer reduzierten Schaltfrequenz im Überlastbetriebsmodus betrieben, um eine kurzzeitig erhöhte Leistungsabgabe in einer Überlastsituation zu ermöglichen.

Es wird somit besonders vorgeschlagen, gezielt eine erhöhte Leistung in das elektrische Versorgungsnetz einzuspeisen. Besonders kann diese erhöhte Leistung über der Nennleistung des Umrichtersystems liegen. Das wird wenigstens kurzfristig durch Verwenden einer geringeren Schaltfrequenz ermöglicht.

Da starke Überlasten im elektrischen Netz bzw. Anforderungen höherer Leistung durch das Netz sehr selten auftreten und dabei häufig nicht länger als 10 ms anliegen, kann durch den beschriebenen Überlastbetrieb auch bspw. eine hohe Momentanreserve bereitgestellt werden. Das Umrichtersystem ist dabei vorzugsweise dazu vorbereitet, jederzeit eigenständig oder auf Aufforderung eines Netzbetreibers in den Überlastbetriebsmodus umzuschalten.

Neben den starken Überlasten, die relativ selten auftreten und dabei meist nicht länger als 10ms auftreten, können auch Überlasten vorliegen, bei denen weniger Leistung direkt bereitgestellt werden muss. Länger anhaltende Überlasten können dabei etwa von 10ms bis 30s vorliegen. Es wird somit gemäß einer Variante vorgeschlagen, Überlasten für einen Zeitraum im Bereich von 10ms bis 30s zuzulassen. Demnach beschreibt das vorgeschlagene Verfahren primär eine Momentanreserve-Regelung um auf Netzfehler und Überlastsituation reagieren zu können.

Gemäß einer Ausführungsform wird somit vorgeschlagen, die Leistungsabgabe unverändert zu lassen, aber dennoch die Schaltfrequenz zu verringern. Dadurch kann der Umrichter entlastet werden. Das kann auch eine Situation adressieren, bei der der Ausgangsstrom ansteigt, obwohl die Leistungsabgabe nicht ansteigt. Ein solcher Stromanstieg kann bspw. durch einen Inrush-Strom auftreten.

Dadurch kann eine Überlast bei reduzierter Schaltfrequenz durchfahren werden, um das Umrichtersystem vor einer Überlasteinkopplung und ggf. einer Überhitzung zu schützen.

Demnach wird das Umrichtersystem derart betrieben, dass durch die reduzierte Schaltfrequenz Schaltverluste im Umrichtersystem reduziert werden und ein weniger idealer sinusförmiger Ausgangsstrom als im Normalbetriebsmodus durch das Umrichtersystem erzeugt wird um Schaltverluste zu senken und das Umrichtersystem vor einer Überhitzung zu schützen.

Vorzugsweise weist das Umrichtersystem einen ersten und einen zweiten Parametersatz auf, die die Grenztemperaturen der Komponenten des Umrichtersystems im Normalbetrieb sowie im Überlastbetriebsmodus umfassen. Dabei liegen die maximalen Grenztemperaturen im Überlastbetriebsmodus oberhalb relativer Temperaturgrenzen des Normalbetriebsmodus. Neben den genannten Temperaturgrenzen können auch andere Betriebsparameter im Parametersatz hinterlegt sein, die im Überlastbetriebsmodus an das Umrichtersystem vorgegeben werden, wie der einzustellende mittlere Schaltfrequenzsollwert und/oder der Leistungsabgabesollwert. Dies sind generell angepasste Sollwerte für ein Regelverfahren wie ein erhöhter Stromsollwert im Falle einer Überlasteinspeisung oder anderweitig angepasste Sollwerte für das Umrichtersystem wie ein geänderter Schaltfrequenzsollwert. Als weiteres konkretes Beispiel können auch speziell an den Überlastbetriebsmodus angepasst Sollwerte für ein Toleranzbandverfahren oder ein Pulsweitenmodulationsverfahren im Parametersatz des Überlastbetriebsmodus hinterlegt sein.

Dabei wird vorgeschlagen, dass die maximalen Grenztemperaturen im Überlastbetriebsmodus größer sind als die maximalen Grenztemperaturen im Normalbetriebsmodus,

der mittlere Schaltfrequenzsollwert im Überlastbetriebsmodus kleiner ist als der mittlere Schaltfrequenzsollwert im Normalbetriebsmodus, und

der erste Leistungsabgabesollwert größer als der zweite Leistungsabgabesollwert oder gleich ist, und wobei beim Umschalten des Umrichtersystems in den Überlastbetriebsmodus von dem ersten Parametersatz zu dem zweiten Parametersatz umgeschaltet wird, um das Umrichtersystem kurzzeitig mit den größeren maximalen Grenztemperaturen betreiben zu können.

Durch das vorgeschlagene Umschalten vom ersten Parametersatz zu dem zweiten Parametersatz, so dass der Betrieb im Überlastmodus auf einfache Art und Weise umgesetzt wird, werden besonders auch unkontrollierte Übergangsverhalten vermieden.

Dabei können die Temperaturgrenzen im Normalbetrieb relative Temperaturgrenzen sein, die für eine kurze Zeit überschritten werden dürfen, aber bereits zu Degradationserscheinungen in den Komponenten des Umrichtersystems führen können. Die Temperaturgrenzen im Überlastbetriebsmodus sind hingegen besonders als absolute Grenzen zu verstehen, die in keiner Komponente des Umrichtersystems überschritten werden dürfen, da sonst lokale thermische Schäden im Umrichtersystem entstehen können. Es wird vorsorglich darauf hingewiesen, dass bei einer fachmännischen Festlegung der Temperaturgrenzen im Überlastbetriebsmodus eine Sicherheitsmarge in Bezug auf eine Temperaturgrenze vorhanden ist, bei der eine Komponente des Umrichtersystems thermisch zerstört werden würde.

Durch das vorgeschlagene Verfahren kann der Wechselrichter kurzzeitig im Überlastbetriebsmodus oberhalb einer, auf den Normalbetrieb bezogenen, relativen Temperaturgrenze betrieben werden, wobei dieser Betriebsmodus nur kurzzeitig vorliegen sollte. Gegenüber konventionellen Umrichtersystemen besitzt das vorgeschlagene Umrichtersystem bzw. das Umrichtersystem mit dem vorgeschlagenen Verfahren somit einen größeren nutzbaren Arbeitsbereich und ermöglicht kurzzeitig eine Leistungsabgabe über 100% der abgegebenen Leistung bezogen auf die maximale Abgabeleistung im Dauerbetrieb eines Nennbetriebs.

Vorzugsweise wird die Zeit, in der sich das Umrichtersystem im Überlastbetriebsmodus befindet, aufgezeichnet. Um eine thermische Überlasthistorie für das Umrichtersystem erstellen zu können, wird als bevorzugte Variante vorgeschlagen, einen Übertemperaturwert über der Zeit zu einem Überlastintegral zu integrieren. Dabei beschreibt die Übertemperatur einen grenztemperaturüberschreitenden Temperaturwert einer beliebigen Komponente des Umrichtersystems. Dies bedeutet, dass beispielsweise der Temperaturwert über die Zeit integriert wird, sobald die relative Temperaturgrenze des Normalbetriebsmodus überschritten wird. Die Integration erfolgt dabei so lange, bis die Temperatur des Umrichtersystems wieder unterhalb der relativen Grenztemperatur des Normalbetriebsmodus absinkt. Der Temperaturwert oberhalb des relativen Grenzwertes im Normalbetriebsmodus wird daher auch als Übertemperaturwert bezeichnet.

Es kann somit eine thermische Überlasthistorie für das Umrichtersystem erstellt werden, und die ermöglicht eine Abschätzung über die Häufigkeit des Auftretens einer Überlast. Bei einem sehr großen Überlastintegralwert wird ein Rückschluss auf überlastbedingte Alterungserscheinungen (Degradation) der Komponenten des Umrichtersystems ermöglicht.

Bevorzugt wird das Umrichtersystem im Überlastbetrieb mit einer um 50%, vorzugsweise um 75%, insbesondere um 90% reduzierten Frequenz- bzw. Schaltfrequenz im Vergleich zum Normalbetriebsmodus betrieben. Es wird somit eine signifikante Reduzierung der Schaltfrequenz vorgeschlagen, um dadurch die Schaltverluste in dem Überlastbetrieb merklich zu reduzieren, so dass entsprechen zumindest ein höherer Strom eingespeist werden kann, bei gleicher Wärmeentwicklung.

Vorzugsweise beinhaltet die Strom- und Spannungsmessung am Umrichtersystem oder am elektrischen Versorgungsnetz auch eine Frequenz- und Amplitudenmessung des gemessenen Stromes und der gemessenen Spannung. Damit können die entsprechenden Messgrößen für vorbeschriebene Ausführungsformen erfasst werden.

Somit ist das Umrichtersystem dazu eingerichtet, eine Überlastsituation anhand einer Frequenz- oder Amplitudenmessung des gemessenen Stromes oder der Spannung zu erkennen, da Überlastsituationen oder Netzereignisse anhand einer Frequenz- oder Amplitudenänderung detektiert oder antizipiert werden können. Die Frequenz- und Amplitudenmessung schließt dabei ebenfalls ein, die Änderungsraten der Frequenz und der Amplitude des Stromes und der Spannung messen zu können, um anhand der Ableitung bzw. des Gradienten einen starken Abfall einer eintretenden Überlastsituation prädizieren zu können.

Ferner wird erfindungsgemäß eine Windenergieanlage zum Austauschen elektrischer Leistung mit einem elektrischen Versorgungsnetz an einem Netzanschlusspunkt gemäß Anspruch 14 vorgeschlagen.

Demnach umfasst die Windenergieanlage ein Umrichtersystem zum Erzeugen eines elektrischen Stroms und/oder einer elektrischen Spannung, wobei das Umrichtersystem dabei auch mehrere Umrichter bzw. mehrere Umrichterschränke aufweisen kann. Reicht die Abgabeleistung eines einzigen Umrichters nicht aus, um die erzeugte Leistung des Generators der Windenergieanlage einzuspeisen, können auch mehrere Umrichter bzw. Schaltschränke mit einem Umrichter parallel geschaltet sein.

Als weitere Komponente der Windenergieanlage wird eine Steuerungseinrichtung zum Steuern des Umrichtersystems vorgeschlagen. Die Steuerungseinrichtung kann dabei als Prozessrechner vorgesehen oder auf einem solchen Prozessrechner implementiert sein. Demnach wird vorgeschlagen, die Steuereinrichtung als Hardware oder als Teil eines Computerprogramms zu realisieren. Besonders ist die Steuereinheit dazu vorbereitet, das Umrichtersystem in einer Überlastsituation mit einer gegenüber dem Normalbetrieb reduzierten Schaltfrequenz zu betreiben. Dazu kann die Steuerungseinrichtung bspw. eine Taktfrequenz ändern, oder eine Toleranzbandbreite ändern.

Neben der Steuereinrichtung sind auch Messmittel zum Erfassen einer das Umrichtersystem betreffenden Überlastsituation vorgesehen. Ein Messmittel kann dabei je nach Einsatzort unterschiedliche Messgrößen erfassen. Beispielsweise kann ein erstes Messmittel eine Strommessung am Ausgang des Umrichtersystems durchführen und ein zweites Messmittel dazu verwendet werden, eine Temperaturmessung an einer stromführenden Komponente des Umrichtersystems vorzunehmen. Eine Spannungsmessung am Zwischenkreis des Umrichtersystems oder im elektrischen Versorgungsnetz kann ebenfalls realisiert werden. Ganz generell werden die Messmittel dazu verwendet, um Messdaten oder Messwerte zu erfassen, anhand derer eine Überlastsituation abgeleitet bzw. erkannt wird. Mehrere Messmittel können auch gleichzeitig zur Messdaten- oder Messwerterfassung eingesetzt werden, damit eine Überlastsituation ggf. auch redundant erfasst werden kann, wenn beispielsweise ein Messmittel ausfällt oder mehrere der eingangs beschriebenen Kriterien erfüllt werden, die auf eine vorherrschende Überlastsituation hindeuten.

Neben der Steuereinrichtung kann auch die Umschalteinrichtung, die zwischen dem Normalbetriebsmodus und dem Überlastbetriebsmodus umschalten kann, auf einem Prozessrechner vorgesehen oder als Teil eines Computerprogramms implementiert sein. Die Umschalteinrichtung kann auch Teil der Steuereinrichtung sein.

Demnach wird gemäß einer Ausführungsform vorgeschlagen, dass die Windenergieanlage, insbesondere die Steuerungseinrichtung, dazu vorbereitet ist, ein Verfahren gemäß einer der vorstehend beschriebenen Ausführungsformen auszuführen.

Bevorzugt weist das Umrichtersystem temperaturfeste Leistungstransistoren auf, wobei die Leistungstransistoren insbesondere aus modernen Halbleitermaterialien wie SiC, GaN oder SiGE bestehen. Insbesondere bieten moderne Leistungstransistoren auf Basis von Siliziumkarbid im Vergleich zu konventionellen Leistungstransistoren auf Siliziumbasis positive elektrische Eigenschaften in Bezug auf die Schaltgeschwindigkeit, die Wärmeleitfähigkeit sowie der kritischen Feldstärke.

Es wird somit ein Umrichtersystem vorgeschlagen, das moderne Leistungstransistoren verwendet, die sich durch eine bessere Temperaturfestigkeit auszeichnen und somit ebenfalls die Fähigkeit des Umrichtersystems, überlastfähig zu sein, konstruktiv erhöhen. Gemäß einer weiteren Ausführungsform weist die Windenergieanlage einen ersten und zweiten Parametersatz auf. Die beiden Parametersätze umfassen dabei Betriebsparameter zum Betreiben der Windenergieanlage im Normalbetriebsmodus und im Überlastbetriebsmodus wie beispielsweise den maximalen Grenztemperaturen der Komponenten des Umrichtersystems, die für den jeweiligen Betriebsmodus einzustellende mittlere Schaltfrequenz und/oder der Leistungsabgabesollwert. Die Parametersätze können dabei in der Steuereinrichtung der Windenergieanlage hinterlegt sein, also - wie zuvor beschrieben - in einem Prozessrechner oder als Teil eines Computerprogramms. Die Umschalteinrichtung kann somit zwischen den hinterlegten Parametersätzen umschalten und konfiguriert somit die Windenergieanlage bzw. das Umrichtersystem für den Betrieb im Normalbetriebsmodus oder im Überlastbetriebsmodus.

Ferner wird erfindungsgemäß ein Windpark mit mehreren Windenergieanlagen vorgeschlagen, der gemäß einer weiteren Ausführungsform wenigstens eine Windenergieanlage gemäß einer vorstehend beschriebenen Ausführungsform aufweist. Vorzugsweise weist der Windpark nur solche Windenergieanlagen auf.

Somit ermöglicht der Windpark ebenfalls einen Normalbetriebsmodus und einen Überlastbetriebsmodus, wobei in einer Überlastsituation eine zusätzliche Summenleistung aller Windenergieanlagen in das elektrische Versorgungsnetz temporär eingespeist werden kann. Hierzu sei darauf hingewiesen, dass bei einem Windpark mit unterschiedlichen Windenergieanlagentypen, die Überlastfähigkeit der einzelnen Windenergieanlagen unterschiedlich groß sein kann. Jede Windenergieanlage kann dabei nur so viel zusätzliche Leistung in einer Überlastsituation bereitstellen wie ihr Umrichtersystem zulässt bzw. durch die zuvor beschriebene Überlastbetriebsdauer festlegt.

Wird keine zusätzliche Leistung in einer Überlastsituation angefordert kann der Windpark somit auch die Überlastsituation durchfahren.

Die vorliegende Erfindung wird nun nachfolgend exemplarisch anhand von Ausführungsbeispielen unter Bezugnahme auf die begleitenden Figuren näher erläutert.

Figur 1     zeigt eine schematische Ansicht einer Windenergieanlage.

Figur 2     zeigt eine schematische Ansicht eines Windparks.

Figur 3     zeigt schematisch eine erste regelungstechnische Umschaltung in einen Überlastbetriebsmodus von einem Normalbetriebsmodus gemäß einer Ausführungsform, wenn eine Überlastsituation erfasst wurde.

Figur 4     zeigt schematisch eine zweite regelungstechnische Umschaltung in einen Überlastbetriebsmodus von einem Normalbetriebsmodus gemäß einer Ausführungsform, wenn eine Überlastsituation erfasst wurde.

Figur 5     zeigt schematisch den Verlauf der Leistungsabgabe, der Schaltfrequenz sowie der Temperaturentwicklung im Umrichtersystem während einer temporär auftretenden Überlastsituation.

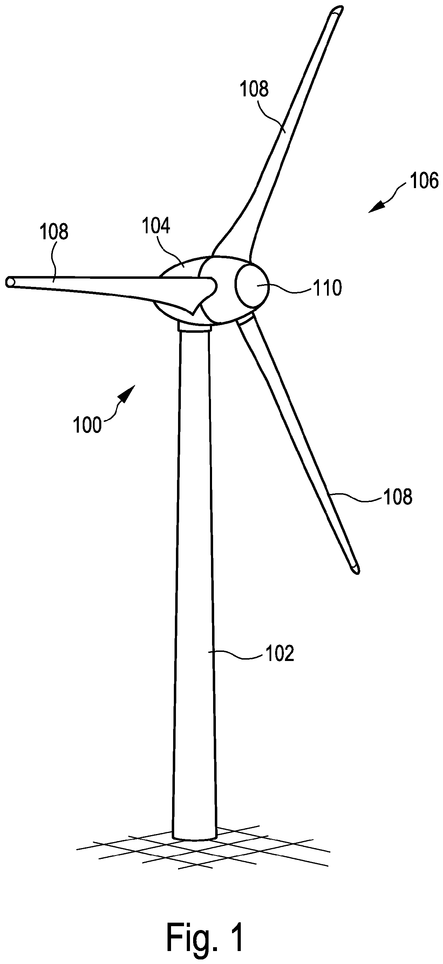

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

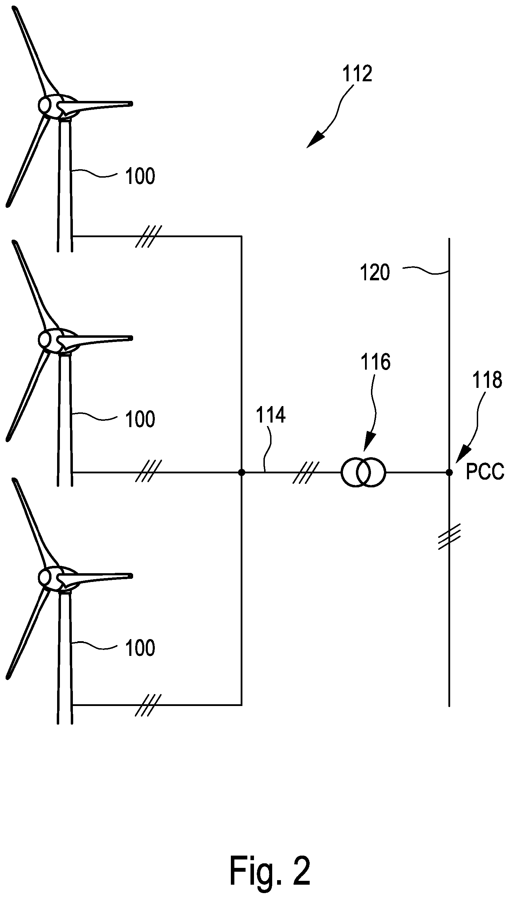

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

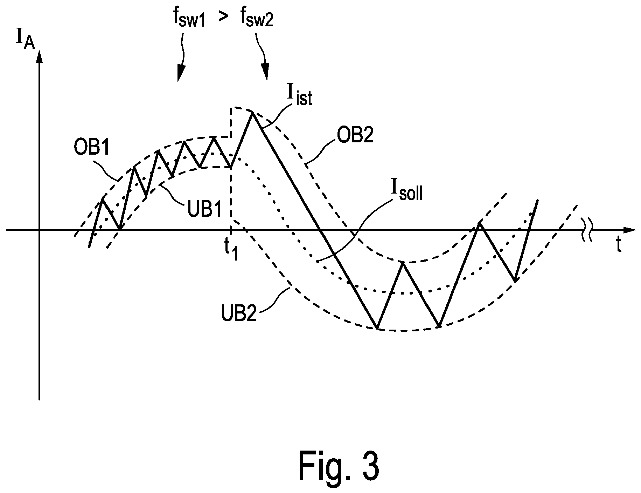

Figur 3 zeigt schematisch ein Toleranzbandverfahren, das beispielsweise als bevorzugtes Ansteuerungsverfahren im Umrichtersystem verwenden kann, um die Leistungstransistoren im Umrichtersystem ansteuern zu können und einen festgelegten Ausgangsstrom zu erzeugen. Dabei ist in der Figur 3 der erzeugte Ausgangsstrom $I_A$ des Umrichtersystems über der Zeit t aufgetragen, wobei zur besseren Veranschaulichung lediglich eine Sinuswelle eines Phasenstroms einer Phase dargestellt ist. Ganz generell basiert das Toleranzbandverfahren auf dem Prinzip, dass eine obere Grenze (OB) und eine untere Grenze (UB) für den Ausgangsstrom $I_A$ des Umrichtersystems festgelegt werden, die um einen optimalen Sinus herum verlaufen, wobei der optimale Sinus als Sollwert $I_{soll}$ vorgegeben wird. Der meist am Ausgang des Umrichtersystems gemessene Ausgangsstrom $I_{IST}$ verläuft dabei nur innerhalb der festgelegten Toleranzgrenzen, das auch als Toleranzband bezeichnet wird. Erreicht der gemessene Ausgangsstrom $I_{IST}$ dabei entweder die obere oder untere Grenze des Toleranzbandes wird ein Umschaltvorgang der Leistungstransistoren des Umrichters

durchgeführt bzw. ein Kommutierungsvorgang auf einen anderen Strompfad durch eine geänderte Schalterstellung im Wechselrichter vorgenommen.

In dem in Figur 3 gezeigten Ausführungsbeispiel liegen die obere Grenze OB1 und die untere Grenze UB1 näher an dem sinusförmigen Sollstromwert $I_{soll}$ als die obere Grenze OB2 und die untere Grenze UB2. Zu den Zeitpunkten, an denen der gemessene Ist-Strom $I_{ist}$ auf eine Toleranzbandgrenze trifft, findet eine Kommutierung bzw. eine Umschaltung auf eine andere Schalterstellung im Umrichtersystem statt, wodurch der Ist-Strom einen zickzackförmigen Verlauf innerhalb des Toleranzbandes einnimmt. Zum Vergleich von OB1 und UB1 weisen die Grenzen OB2 und UB2 einen größeren Abstand zum Sollstromwert $I_{soll}$ auf. Dies hat zur Folge, dass im ersten Zeitabschnitt bis zum Zeitpunkt $t_1$ die Leistungstransistoren im Umrichtersystem häufiger schalten müssen, als es im zweiten Zeitbereich nach $t_1$ der Fall ist. Demnach ist die Schaltfrequenz der Leistungstransistoren im Mittel im Zeitbereich nach $t_1$ geringer. Beispielhaft liegt bis zum Zeitpunkt $t_1$ der Normalbetriebsmodus vor, d.h. keines der Kriterien, die auf eine Überlastsituation hinweisen wird erfüllt bzw. wird vom Umrichtersystem detektiert. Zum Zeitpunkt $t_1$ wird nun beispielhaft wenigstens eins der zuvor beschriebenen Kriterien erfüllt, so dass eine Umschaltung in den Überlastbetriebsmodus vom Umrichtersystem durchgeführt wird, wobei eine neue obere und untere Grenze OB2 und UB2 im Toleranzbandverfahren vorgegeben werden. Diese Grenzen können beispielsweise in dem Parametersatz des Überlastbetriebsmodus hinterlegt sein. Durch die Verbreiterung des Toleranzbandes sinkt somit die mittlere Schaltfrequenz, wodurch die Schaltverluste im Umrichtersystem insgesamt reduziert werden. Demnach ist die mittlere Schaltfrequenz $f_{sw1}$ im Normalbetriebsmodus größer als die Frequenz $f_{sw2}$ im Überlastbetriebsmodus und die Leistungsabgabe des Umrichtersystems näherungsweise gleichbleibend.

Neben dem Toleranzbandverfahren können aber auch andere Ansteuerungsverfahren vorgesehen werden, wie zum Beispiel ein sogenanntes Pulsweitenmodulationsverfahren. Dieses Ansteuerungsverfahren ist dem Fachmann allgemein bekannt.

Bei einem Pulsweitenmodulationsverfahren wird dabei, um eine niedrigere mittlere Frequenz zu erzeugen, ganz generell der Anstieg eines linear an- oder absteigenden Sägezahn- oder Dreiecksignals reduziert. Das Sägezahn- oder Dreiecksignal wird dabei zusammen mit einem Trägersignal verarbeitet, um ein PWM-Signal zur Ansteuerung der Leistungstransistoren zu erzeugen. Demnach sinkt bei einem solchen Pulsweitenmodulationsverfahren die mittlere Schaltfrequenz, wenn die Frequenz bzw. der Anstieg des Sägezahn- oder Dreiecksignal reduziert wird.

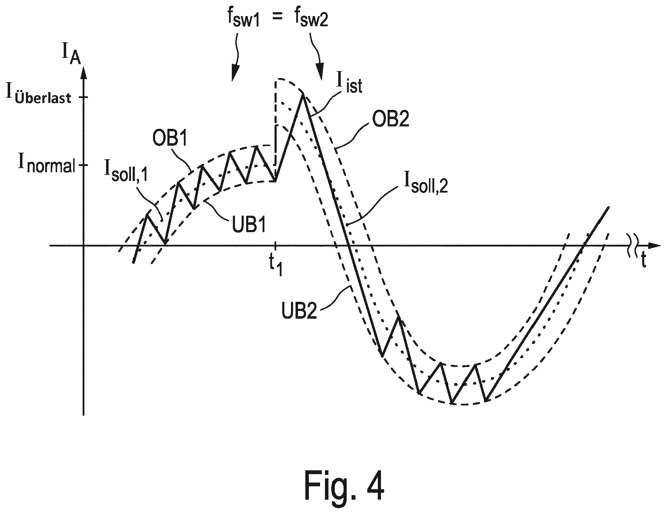

Das in der Figur 4 gezeigte weitere Ausführungsbeispiel zeigt wie eine höhere Belastung am Umrichtersystem zugelassen werden kann. Dabei kann ein erhöhter Ausgangsstrom bzw. eine erhöhte Leistungsabgabe am Umrichtersystem im Überlastmodus eingestellt werden, ohne die mittlere Schaltfrequenz zu verändern. Hierzu werden die beiden Toleranzbandgrenzen OB2 und UB2 angehoben und ein neuer Ausgangsstromsollwert $I_{soll,2}$ im Überlastbetriebsmodus vorgegeben. Die neuen Werte für OB2, UB2 und $I_{soll,2}$ können in dem Parametersatz für den Überlastbetriebsmodus enthalten sein. Der Abstand der Toleranzbandgrenzen OB1 zu UB1 sowie OB2 zu UB2 bleibt dabei im Überlastbetriebsmodus unverändert, sodass die mittleren Schaltfrequenzen im Normalbetriebsmodus $f_{sw1}$ der mittleren Schaltfrequenz $f_{sw2}$ im Überlastbetriebsmodus entspricht.

Das Umrichtersystem erzeugt somit einen höheren Ausgangsstrom $I_{overload}$ im Überlastbetriebsmodus. Dieser wird aber nur für eine vorbestimmte maximale Überlastdauer zugelassen. Zusätzlich oder alternativ werden auch höhere Temperaturgrenzen für das Umrichtersystem im Überlastbetriebsmodus für einen kurzen Zeitraum zugelassen. Dies ist in der Figur 4 zeichenrisch nicht dargestellt.

Demnach kann das Umrichtersystem im Überlastbetriebsmodus betrieben werden, wenn ein höherer Leistungsbedarf erwartet wird oder wenn ein externes Signal dazu auffordert. Somit kann kurzzeitig ein erhöhter Leistungsabgabesollwert vorgeben bzw. eingestellt werden. Wenn keine erhöhte Leistung gefordert wird ist es zudem möglich, wenigstens eine erhöhte Temperaturgrenze im Überlastbetriebsmodus zuzulassen ohne dabei die mittlere Schaltfrequenz zu reduzieren. Es wurde erkannt, dass eine solche Leistungsüberhöhung zugelassen werden kann, wenn sie kurzzeitig ist.

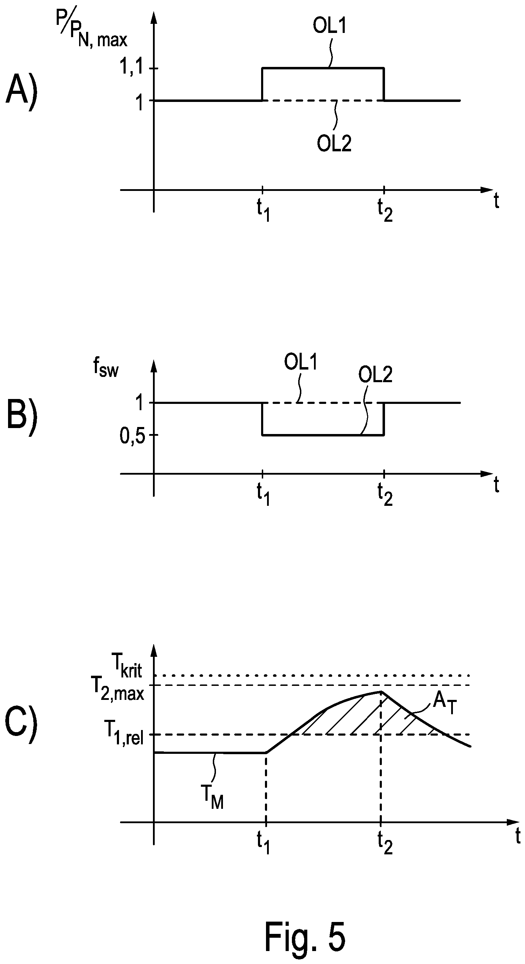

In Figur 5 wird ebenfalls das Verhalten des Umrichtersystems beim Auftreten einer Überlastsituation zum Zeitpunkt $t_1$ anhand der Diagramme A, B und C veranschaulicht. Dabei veranschaulicht das Diagramm A das Leistungsabgabeverhalten des Umrichtersystems in einer Überlastsituation bezogen auf eine maximale Nennleistung $P_{N,max}$ die das Umrichtersystem im Dauerbetrieb einspeisen kann.

Wird zum Zeitpunkt $t_1$ eine Überlastsituation detektiert, kann gemäß der vorgeschlagenen Lösung eine höhere Nennleistung P in das elektrische Versorgungsnetz eingespeist werden, indem die Frequenz um 50% abgesenkt wird und ein weniger idealer sinusförmiger Strom in das Versorgungsnetz eingespeist wird. Eine Frequenzreduzierung der mittleren Schaltfrequenz $f_{sw}$ zum Zeitpunkt $t_1$ ist dabei im Diagramm B im Kurvenabschnitt OL2 veranschaulicht. Zusätzlich oder alternativ kann die mittlere Schaltfrequenz $f_{sw}$ konstant gehalten werden, was in Diagramm B der Kurvenabschnitt OL1 zeigt, und dennoch eine erhöhte Leistung eingespeist werden, was in Diagramm A durch den Kurvenabschnitt OL1 veranschaulicht ist. Dazu veranschaulicht in Diagramm A der Kurvenabschnitt OL2 nur den unveränderten Verlauf der Leistung P als Orientierung.

Die Möglichkeit, die reduzierte Schaltfrequenz aufgrund der geringeren Schaltverluste zu nutzen, um kurzzeitig eine erhöhte Leistung abgeben zu können, wird im Diagramm A mit OL1 angedeutet. Im dem gezeigten Ausführungsbeispiel wird beispielsweise ein erhöhter Effektivwert des Ausgangsstroms durch das Umrichtersystem im Überlastbetrieb gegenüber dem Normalbetriebsmodus generiert. Dies hat jedoch zur Folge, dass das Umrichtersystem bzw. die stromführenden Komponenten des Umrichtersystems thermisch erhitzt werden. Dies ist in Diagramm C veranschaulicht.

Zur Vereinfachung ist im Diagramm C ein idealisierter Temperaturverlauf $T_M$ dargestellt. Beispielsweise wird angenommen, dass im Zeitabschnitt bis $t_1$ die abgegebene Wärmeleistung der erzeugten Wärmeleistung in einer Komponente des Umrichtersystems entspricht und somit ein konstanter Verlauf vorliegt. Dabei wird die Temperatur $T_M$ bevorzugt an der Komponente bzw. den Komponenten bestimmt, an denen sich am schnellsten eine Überhitzung in einer Überlastsituation ausbilden würde. Wird nun die abgegebene Leistung zum Zeitpunkt $t_1$ in einer Überlastsituation erhöht, wird folglich unter der genannten Annahme mehr thermische Energie erzeugt als über die vorgesehenen Kühlstrecken oder Kühlkörper abgegeben werden kann. Dies hat zur Folge, dass ab dem Eintreten der Überlastsituation zum Zeitpunkt $t_1$ ein Anstieg der Temperatur der Komponenten im Umrichtersystem resultiert.

In dem Diagramm C sind drei Temperaturgrenzen an der y-Achse dargestellt, wobei sich die Temperaturgrenze $T_{1,rel}$ auf die relative Temperaturgrenze im Normalbetriebsmodus bezieht, die Temperaturgrenze $T_{2,max}$ die maximale Temperaturgrenze im Überlastbetrieb ist und die Temperatur $T_{krit}$ einer kritischen und absoluten Maximaltemperatur entspricht, bei der die Komponente des Umrichtersystems thermisch zerstört wird. Überschreitet die gemessene Temperaturwert $T_M$ durch die erhöhte Leistungseinspeisung nun die Temperaturgrenze $T_{1,rel}$, können bereits Alterungserscheinungen (Degradation) an oder in den Komponenten des Umrichtersystems auftreten. In dem Temperaturbereich von $T_{1,rel}$ zu $T_{2,max}$ befindet sich das Umrichtersystem somit in einer gewollten Übertemperatur.

Ferner ist in der Figur 5C eine Temperaturzeitfläche $A_T$ angedeutet, die als Überlasthistorie einem geeigneten Speichermedium aufgezeichnet und gespeichert werden kann, um Rückschlüsse auf die Häufigkeit von Überlasten sowie einem thermischen Belastungsprofil der Komponenten erstellen zu können.

Auf ähnliche Weise kann ein Quadrat eines Ausgangsstrom $i_A^2$ über die Zeit integriert werden und das Integral, also die Fläche unter einer solchen $i_A^2$-Kurve über die Zeit, muss dann unter einem Grenzwert bleiben.

## Patentansprüche

**1.** Verfahren zum Betreiben eines Umrichtersystems einer Windenergieanlage (100) zum Austauschen elektrischer Leistung mit einem elektrischen Versorgungsnetz (120) an einem Netzanschlusspunkt (118), umfassend die Schritte:

- Betreiben des Umrichtersystems in einem Normalbetriebsmodus;
- Erfassen einer das Umrichtersystem betreffenden Überlastsituation;
- Umschalten des Umrichtersystems in einen Überlastbetriebsmodus wenn eine Überlastsituation erfasst wurde, und dann
- Betreiben des Umrichtersystems in dem Überlastbetriebsmodus,

wobei im Überlastbetriebsmodus des Umrichtersystems eine mittlere Schaltfrequenz ($f_{sw}$) zum Erzeugen eines Ausgangsstroms gegenüber dem Normalbetriebsmodus reduziert wird, **dadurch gekennzeichnet, dass** im Überlastbetriebsmodus des Umrichtersystems für eine vorbestimmte maximale Überlastdauer eine höhere Belastung am Umrichtersystem zugelassen wird, nämlich eine erhöhte Temperatur, und dass die mittlere Schaltfrequenz ($f_{sw}$) für die vorbestimmte maximale Überlastdauer reduziert wird, wobei die maximale Überlastdauer abhängig einer thermischen Vorbelastung des Umrichtersystems oder abhängig einer thermischen Vorbelastung von Komponenten des Umrichtersystems festgelegt wird.

**2.** Verfahren nach Anspruch 1, **dadurch gekennzeichnet, dass**

- im Überlastbetriebsmodus des Umrichtersystems für die vorbestimmte maximale Überlastdauer außerdem ein erhöhter Ausgangsstrom zugelassen wird, und/oder dass
- die maximale Überlastdauer außerdem abhängig eines i2t-Wertes festgelegt wird.

**3.** Verfahren nach Anspruch 1 oder 2, **dadurch gekennzeichnet, dass** das Erfassen einer Überlastsituation mittels einer Strommessung und/oder mittels einer Temperaturmessung und/oder einer Spannungsmessung erfolgt, wobei die Strommessung vorzugsweise am Ausgang des Umrichtersystems vorgenommen wird, und wobei die Temperaturmessung vorzugsweise an einem Kühlkörper und/oder an einer stromführenden Komponente des Umrichtersystems vorgenommen wird, und wobei die Spannungsmessung vorzugsweise an einem Zwischenkreis des Umrichtersystems und/oder am elektrischen Versorgungsnetz (120) und/oder im Parknetz (114) vorgenommen wird.

4. Verfahren nach einem der vorstehenden Ansprüche, **dadurch gekennzeichnet, dass** zwischen dem Normalbetriebsmodus und dem Überlastbetriebsmodus umgeschaltet wird in Abhängigkeit wenigstens eines Kriteriums aus der Liste aufweisend:

   - ein Überschreiten einer festgelegten Grenztemperaturwert an einer stromführenden Komponente des Umrichtersystems;
   - ein Überschreiten eines festgelegten Grenzstroms am Ausgang des Umrichtersystems;
   - ein Überschreiten einer festgelegten Grenzspannung im Umrichtersystem;
   - ein Überschreiten eines festgelegten Spannungsbereiches im elektrischen Versorgungsnetz, wenn das Umrichtersystem im Normalbetriebsmodus innerhalb des Spannungsbereichs betrieben wird;
   - ein Überschreiten eines festgelegten Frequenzbereiches der Spannung im elektrischen Versorgungsnetz, wenn das Umrichtersystem im Normalbetriebsmodus innerhalb des Frequenzbereich betrieben wird;
   - eine Aufforderung eine höhere Leistungsabgabe vorzunehmen durch ein externes Signal.

5. Verfahren nach einem der vorstehenden Ansprüche, **dadurch gekennzeichnet, dass** eine Strombegrenzung des Umrichtersystems erfolgt, wenn eine bzw. die maximale Überlastdauer erreicht wird.

6. Verfahren nach einem der vorstehenden Ansprüche, **dadurch gekennzeichnet, dass** von dem Überlastbetriebsmodus zurück in den Normalbetriebsmodus geschaltet wird, wenn die Überlastsituation nicht mehr erkannt wird.

7. Verfahren nach einem der vorstehenden Ansprüche, **dadurch gekennzeichnet, dass** die maximale Überlastdauer anhand der thermischen Vorbelastung des Umrichtersystems festgelegt wird, wobei die thermische Vorbelastung anhand einer Betriebstemperatur einer Komponente des Umrichtersystems zum Zeitpunkt der erfassten Überlastsituation und/oder anhand eines prozentualen Ausgangsstromwertes in Bezug auf einen Nennausgangsstrom des Umrichtersystems bestimmt wird.

8. Verfahren nach einem der vorstehenden Ansprüche, **dadurch gekennzeichnet, dass** das Umrichtersystem mit einer erhöhten Leistungsabgabe bei reduzierter Schaltfrequenz im Überlastbetriebsmodus betrieben wird, um eine kurzzeitig erhöhte Leistungsabgabe in einer Überlastsituation zu ermöglichen.

9. Verfahren nach einem der vorstehenden Ansprüche, **dadurch gekennzeichnet, dass** das Umrichtersystem mit einer gleichbleibenden Leistungsabgabe bei reduzierter Schaltfrequenz im Überlastbetriebsmodus betrieben wird, um Schaltverluste im Umrichtersystem zu reduzieren.

10. Verfahren nach einem der vorstehenden Ansprüche, **dadurch gekennzeichnet, dass** das Umrichtersystem

    - einen ersten Parametersatz aufweist, der maximale Grenztemperaturen ($T_{1,rel}$) der Komponenten des Umrichtersystems und/oder einen ersten mittleren Schaltfrequenzsollwert ($f_{sw,1}$) und/oder einen ersten Leistungsabgabesollwert ($P_{soll,1}$) im Normalbetriebsmodus umfasst und
    - einen zweiten Parametersatz aufweist der maximale Grenztemperaturen ($T_{2,max}$) der Komponenten des Umrichtersystems und/oder einen zweiten mittleren Schaltfrequenzsollwert ($f_{sw,2}$) und/oder einen zweiten Leistungsabgabesollwert ($P_{soll,2}$) im Überlastbetriebsmodus umfasst, wobei
    die maximalen Grenztemperaturen im Überlastbetriebsmodus größer sind als die maximalen Grenztemperaturen im Normalbetriebsmodus,
    der mittlere Schaltfrequenzsollwert im Überlastbetriebsmodus kleiner ist als der mittlere Schaltfrequenzsollwert im Normalbetriebsmodus, und
    der erste Leistungsabgabesollwert größer als der zweite Leistungsabgabesollwert oder gleich ist, und wobei
    - beim Umschalten des Umrichtersystems in den Überlastbetriebsmodus von dem ersten Parametersatz zu dem zweiten Parametersatz umgeschaltet wird, um das Umrichtersystem kurzzeitig mit den größeren maximalen Grenztemperaturen ($T_{2,max}$) betreiben zu können.

11. Verfahren nach einem der vorstehenden Ansprüche, **dadurch gekennzeichnet, dass** die Zeit in der sich das Umrichtersystem im Überlastbetriebsmodus befindet aufgezeichnet wird, um eine thermische Überlasthistorie für das Umrichtersystem erstellen zu können, wobei insbesondere ein Übertemperaturwert über die Zeit zu einem Überlastintegralwert integriert wird, wobei die Übertemperatur einen eine Grenztemperatur überschreitenden Temperaturwert einer Komponente des Umrichtersystems beschreibt.

12. Verfahren nach einem der vorstehenden Ansprüche, **dadurch gekennzeichnet, dass** die Frequenz im Überlastbetrieb um 50%, vorzugsweise um 75% reduziert wird, insbesondere um 90% im Vergleich zum Normalbetriebsmodus reduziert wird.

13. Verfahren nach einem der vorstehenden Ansprüche, **dadurch gekennzeichnet, dass** die Strom- und Spannungsmessung auch eine Frequenz- und Amplitudenmessung des gemessenen Stromes und der gemessenen Spannung mit einschließt.

14. Windenergieanlage (100) zum Austauschen elektrischer Leistung mit einem elektrischen Versorgungsnetz (120) an einem Netzanschlusspunkt (118), umfassend:

- ein Umrichtersystem zum Erzeugen eines elektrischen Stroms und/oder einer elektrischen Spannung,
- eine Steuerungseinrichtung zum Steuern des Umrichtersystems so, dass es in einem Normalbetriebsmodus; oder in einem Überlastbetriebsmodus betrieben wird,
- Messmittel zum Erfassen einer das Umrichtersystem betreffenden Überlastsituation; und
- eine Umschalteinrichtung zum Umschalten zwischen dem Normalbetriebsmodus und dem Überlastbetriebsmodus wenn eine Überlastsituation erfasst wurde, wobei

die Steuerungseinrichtung dazu vorbereitet ist, das Umrichtersystem im Überlastbetriebsmodus so zu betreiben, dass eine mittlere Schaltfrequenz zum Erzeugen eines Ausgangsstroms gegenüber dem Normalbetriebsmodus reduziert wird und
im Überlastbetriebsmodus des Umrichtersystems für eine vorbestimmte maximale Überlastdauer eine höhere Belastung am Umrichtersystem zugelassen wird, nämlich eine erhöhte Temperatur, und dass
die mittlere Schaltfrequenz ($f_{sw}$) für die vorbestimmte maximale Überlastdauer reduziert wird, wobei die maximale Überlastdauer abhängig einer thermischen Vorbelastung des Umrichtersystems oder abhängig einer thermischen Vorbelastung von Komponenten des Umrichtersystems festgelegt wird.

15. Windenergieanlage nach Anspruch 14, **dadurch gekennzeichnet, dass** die Windenergieanlage, insbesondere die Steuerungseinrichtung, dazu vorbereitet ist, ein Verfahren gemäß einem der Ansprüche 1-13 auszuführen.

16. Windenergieanlage nach einem der Ansprüche 14 oder 15, **dadurch gekennzeichnet, dass** das Umrichtersystem aus temperaturfesten Leistungstransistoren aufgebaut ist, wobei die Leistungstransistoren aus einem Halbleitermaterial bestehen oder dieses zumindest aufweisen, ausgewählt aus der Liste aufweisend:

- Si,
- SiC,
- GaN und
- SiGE.

17. Windenergieanlage nach einem der Ansprüche 14 bis 16, **dadurch gekennzeichnet, dass** das Umrichtersystem

- einen ersten Parametersatz aufweist, der maximale Grenztemperaturen ($T_{1,rel}$) der Komponenten des Umrichtersystems und/oder einen ersten mittleren Schaltfrequenzsollwert ($f_{sw,1}$) und/oder einen ersten Leistungsabgabesollwert ($P_{soll,1}$) im Normalbetriebsmodus umfasst und
- einen zweiten Parametersatz aufweist, der maximale Grenztemperaturen ($T_{2,max}$) der Komponenten des Umrichtersystems im Überlastbetriebsmodus und/oder einen zweiten mittleren Schaltfrequenzsollwert ($f_{sw,2}$) und/oder einen zweiten Leistungsabgabesollwert ($P_{soll,2}$) umfasst,
wobei die maximalen Grenztemperaturen ($T_{2,max}$) im Überlastbetriebsmodus größer sind als die maximalen Grenztemperaturen ($T_{1,rel}$) im Normalbetriebsmodus, und wobei
der mittlere Schaltfrequenzsollwert ($f_{sw,2}$) im Überlastbetriebsmodus kleiner ist als der mittlere Schaltfrequenzsollwert ($f_{sw,1}$) im Normalbetriebsmodus, und wobei
der erste Leistungsabgabesollwert ($P_{soll,1}$) größer als der zweite Leistungsabgabesollwert ($P_{soll,2}$) oder gleich ist, und wobei
- die Windenergieanlage, insbesondere die Steuerungseinrichtung und/oder das Umschaltmittel dazu vorbereitet sind, dass beim Umschalten des Umrichtersystems in den Überlastbetriebsmodus von dem ersten Parametersatz zu dem zweiten Parametersatz umgeschaltet wird, um das Umrichtersystem kurzzeitig mit den größeren maximalen Grenztemperaturen ($T_{2,max}$) betreiben zu können.

18. Windpark (112) mit mehreren Windenergieanlagen (100), **dadurch gekennzeichnet, dass** wenigstens eine der Windenergieanlagen nach einem der Ansprüche 14 bis 17 ausgebildet ist.

**Claims**

1. A method for operating a converter system of a wind turbine (100) in order to exchange electrical power with an electrical supply grid (120) at a grid connection point (118), comprising the steps of:

   - operating the converter system in a normal operating mode;
   - capturing an overload situation affecting the converter system;
   - changing the converter system into an overload operating mode if an overload situation has been captured, and then
   - operating the converter system in the overload operating mode,

   wherein an average switching frequency ($f_{SW}$) for generating an output current is reduced in the overload operating mode of the converter system in comparison with the normal operating mode,
   **characterized in that**
   a higher load on the converter system, namely an increased temperature, is allowed in the overload operating mode of the converter system for a predetermined maximum overload period, and
   the average switching frequency ($f_{SW}$) is reduced for the predetermined maximum overload period, wherein the maximum overload period is determined on the basis of a thermal preload of the converter system or on the basis of a thermal preload of components of the converter system.

2. The method as claimed in claim 1, **characterized in that**

   - an increased output current is also allowed in the overload operating mode of the converter system for the predetermined maximum overload period, and/or **in that**
   - the maximum overload period is also determined on the basis of an $i^2 t$ value.

3. The method as claimed in claim 1 or 2, **characterized in that** an overload situation is captured by means of a current measurement and/or by means of a temperature measurement and/or a voltage measurement, wherein the current measurement is preferably carried out at the output of the converter system, and wherein the temperature measurement is preferably carried out at a heat sink and/or at a live component of the converter system, and wherein the voltage measurement is preferably carried out in an intermediate circuit of the converter system and/or in the electrical supply grid (120) and/or in the farm grid (114).

4. The method as claimed in one of the preceding claims, **characterized in that** a changeover between the normal operating mode and the overload operating mode is made on the basis of at least one criterion from the list comprising:

   - exceeding of a stipulated limit temperature value at a live component of the converter system;
   - exceeding of a stipulated limit current at the output of the converter system;
   - exceeding of a stipulated limit voltage in the converter system;
   - exceeding of a stipulated voltage range in the electrical supply grid if the converter system is operated within the voltage range in the normal operating mode;
   - exceeding of a stipulated frequency range of the voltage in the electrical supply grid if the converter system is operated within the frequency range in the normal operating mode;
   - a request to output a higher power by means of an external signal.

5. The method as claimed in one of the preceding claims, **characterized in that** a current limitation of the converter system is effected if a or the maximum overload period is reached.

6. The method as claimed in one of the preceding claims, **characterized in that** a change from the overload operating mode back into the normal operating mode is made if the overload situation is no longer detected.

7. The method as claimed in one of the preceding claims, **characterized in that** the maximum overload period is determined on the basis of the thermal preload of the converter system, wherein the thermal preload is determined on the basis of an operating temperature of a component of the converter system at the time of the captured overload situation and/or on the basis of a percentage output current value with respect to a nominal output current of the converter system.

8. The method as claimed in one of the preceding claims, **characterized in that** the converter system is operated with an increased power output at a reduced switching frequency in the overload operating mode in order to enable a briefly increased power output in an overload situation.

9. The method as claimed in one of the preceding claims, **characterized in that** the converter system is operated with a constant power output at a reduced switching frequency in the overload operating mode in order to reduce switching losses in the converter system.

10. The method as claimed in one of the preceding claims, **characterized in that** the converter system

   - has a first parameter set comprising maximum limit temperatures ($T_{1,rel}$) of the components of the converter system and/or a first average desired switching frequency value ($f_{sw,1}$) and/or a first desired power output value ($P_{soll,1}$) in the normal operating mode, and
   - has a second parameter set comprising maximum limit temperatures ($T_{2,max}$) of the components of the converter system and/or a second average desired switching frequency value ($f_{sw,2}$) and/or a second desired power output value ($P_{soll,2}$) in the overload operating mode, wherein
   the maximum limit temperatures in the overload operating mode are greater than the maximum limit temperatures in the normal operating mode,
   the average desired switching frequency value in the overload operating mode is less than the average desired switching frequency value in the normal operating mode, and
   the first desired power output value is greater than or equal to the second desired power output value, and wherein
   - a changeover from the first parameter set to the second parameter set is made when changing the converter system into the overload operating mode in order to be able to briefly operate the converter system with the greater maximum limit temperatures ($T_{2,max}$).

11. The method as claimed in one of the preceding claims, **characterized in that** the time in which the converter system is in the overload operating mode is recorded in order to be able to create a thermal overload history for the converter system, wherein an overtemperature value, in particular, is integrated overtime to form an overload integral value, wherein the overtemperature describes a temperature value of a component of the converter system which exceeds a limit temperature.

12. The method as claimed in one of the preceding claims, **characterized in that** the frequency during overload operation is reduced by 50%, preferably by 75%, in particular by 90%, in comparison with the normal operating mode.

13. The method as claimed in one of the preceding claims, **characterized in that** the current and voltage measurement also concomitantly includes a frequency and amplitude measurement of the measured current and of the measured voltage.

14. A wind turbine (100) for exchanging electrical power with an electrical supply grid (120) at a grid connection point (118), comprising:

   - a converter system for generating an electrical current and/or an electrical voltage,
   - a control device for controlling the converter system in such a manner that it is operated in a normal operating mode or in an overload operating mode,
   - measuring means for capturing an overload situation affecting the converter system; and
   - a changeover device for changing over between the normal operating mode and the overload operating mode if an overload situation has been captured, wherein

   the control device is prepared to operate the converter system in the overload operating mode in such a manner that an average switching frequency for generating an output current is reduced in comparison with the normal operating mode, and
   a higher load on the converter system, namely an increased temperature, is allowed in the overload operating mode of the converter system for a predetermined maximum overload period, and
   the average switching frequency ($f_{sw}$) is reduced for the predetermined maximum overload period, wherein the maximum overload period is determined on the basis of a thermal preload of the converter system or on the basis of a thermal preload of components of the converter system

**15.** The wind turbine as claimed in claim 14, **characterized in that** the wind turbine, in particular the control device, is prepared to carry out a method as claimed in one of claims 1-13.

**16.** The wind turbine as claimed in either of claims 14 and 15, **characterized in that** the converter system is constructed from temperature-resistant power transistors, wherein the power transistors consist of a semiconductor material or at least have said material, selected from the list comprising:

- Si,
- SiC,
- GaN and
- SiGE.

**17.** The wind turbine as claimed in one of claims 14 to 16, **characterized in that** the converter system

- has a first parameter set comprising maximum limit temperatures ($T_{1,rel}$) of the components of the converter system and/or a first average desired switching frequency value ($f_{sw,1}$) and/or a first desired power output value ($P_{soll,1}$) in the normal operating mode, and
- has a second parameter set comprising maximum limit temperatures ($T_{2,max}$) of the components of the converter system in the overload operating mode and/or a second average desired switching frequency value ($f_{sw,2}$) and/or a second desired power output value ($P_{soll,2}$),
wherein the maximum limit temperatures ($T_{2,max}$) in the overload operating mode are greater than the maximum limit temperatures ($T_{1,rel}$) in the normal operating mode, and wherein
the average desired switching frequency value ($f_{sw,2}$) in the overload operating mode is less than the average desired switching frequency value ($f_{sw,1}$) in the normal operating mode, and wherein
the first desired power output value ($P_{soll,1}$) is greater than or equal to the second desired power output value ($P_{soll,2}$), and wherein
- the wind turbine, in particular the control device and/or the changeover means, is/are prepared to change over from the first parameter set to the second parameter set when changing the converter system into the overload operating mode in order to be able to briefly operate the converter system with the greater maximum limit temperatures ($T_{2,max}$).

**18.** A wind farm (112) having a plurality of wind turbines (100), **characterized in that** at least one of the wind turbines is designed as claimed in one of claims 14 to 17.

**Revendications**

**1.** Procédé pour faire fonctionner un système convertisseur d'une éolienne (100) pour échanger une puissance électrique avec un réseau d'alimentation électrique (120) sur un point de branchement au réseau (118), comprenant les étapes :

- de fonctionnement du système convertisseur dans un mode de fonctionnement normal ;
- de détection d'une situation de surcharge concernant le système convertisseur ;
- de commutation du système convertisseur dans un mode de fonctionnement en surcharge si une situation de surcharge a été détectée, puis
- de fonctionnement du système convertisseur dans le mode de fonctionnement en surcharge,

dans lequel une fréquence de commutation moyenne ($f_{sw}$) est réduite, dans le mode de fonctionnement en surcharge, pour générer un courant de sortie par rapport au mode de fonctionnement normal,
**caractérisé en ce que**
dans le mode de fonctionnement en surcharge du système convertisseur pendant une durée de surcharge maximale prédéfinie, une contrainte plus élevée est admise sur le système convertisseur, à savoir une température supérieure, et
**que**
la fréquence de commutation moyenne ($f_{sw}$) est réduite pendant la durée de surcharge maximale prédéfinie, dans lequel la durée de surcharge maximale est fixée en fonction d'une précontrainte thermique du système convertisseur ou en fonction d'une précontrainte thermique de composants du système convertisseur.

**2.** Procédé selon la revendication 1, **caractérisé en ce que**

- dans le mode de fonctionnement en surcharge du système convertisseur, un courant de sortie supérieur est par ailleurs admis pendant la durée de surcharge maximale prédéfinie, et/ou que
- la durée de surcharge maximale est par ailleurs fixée en fonction d'une valeur $i^2t$.

**3.** Procédé selon la revendication 1 ou 2, **caractérisé en ce que** la détection d'une situation de surcharge est effectuée au moyen d'une mesure de courant et/ou au moyen d'une mesure de température et/ou d'une mesure de tension, dans lequel la mesure de courant est réalisée de préférence sur la sortie du système convertisseur et dans lequel la mesure de température est réalisée de préférence sur un corps de refroidissement et/ou sur un composant de guidage de courant du système convertisseur, et dans lequel la mesure de tension est réalisée de préférence sur un circuit intermédiaire du système convertisseur et/ou sur le réseau d'alimentation électrique (120) et/ou dans le réseau de parc (114).

**4.** Procédé selon l'une quelconque des revendications précédentes, **caractérisé en ce qu'**une commutation entre le mode de fonctionnement normal et le mode de fonctionnement en surcharge est effectuée en fonction d'au moins un critère issu de la liste présentant :

- un dépassement d'une valeur de température limite fixée sur un composant de guidage de courant du système convertisseur ;
- un dépassement d'un flux limite fixé sur la sortie du système convertisseur ;
- un dépassement d'une tension limite fixée dans le système convertisseur ;
- un dépassement d'une plage de tensions fixée dans le réseau d'alimentation électrique quand le système convertisseur fonctionne dans le mode de fonctionnement normal dans la plage de tensions ;
- un dépassement d'une plage de fréquences fixée de la tension dans le réseau d'alimentation électrique quand le système convertisseur fonctionne dans le mode de fonctionnement normal dans la plage de fréquences ;
- une demande à réaliser une distribution de puissance plus élevée par un signal externe.

**5.** Procédé selon l'une quelconque des revendications précédentes, **caractérisé en ce qu'**une limitation de courant du système convertisseur est effectuée quand une ou la durée de surcharge maximale est atteinte.

**6.** Procédé selon l'une quelconque des revendications précédentes, **caractérisé en ce qu'**un passage du mode de fonctionnement en surcharge pour revenir dans le mode de fonctionnement normal est effectué quand la situation de surcharge n'est plus identifiée.

**7.** Procédé selon l'une quelconque des revendications précédentes, **caractérisé en ce que** la durée de surcharge maximale est fixée à l'aide de la précontrainte thermique du système convertisseur, dans lequel la précontrainte thermique est définie à l'aide d'une température de fonctionnement d'un composant du système convertisseur au moment de la situation de surcharge détectée et/ou à l'aide d'une valeur de courant de sortie en pourcentage en ce qui concerne un courant de sortie nominal du système convertisseur.

**8.** Procédé selon l'une quelconque des revendications précédentes, **caractérisé en ce que** le système convertisseur fonctionne avec une distribution de puissance supérieure dans le cas d'une fréquence de commutation réduite dans le mode de fonctionnement en surcharge pour permettre une distribution de puissance brièvement supérieure dans une situation de surcharge.

**9.** Procédé selon l'une quelconque des revendications précédentes, **caractérisé en ce que** le système convertisseur fonctionne avec une distribution de puissance constante dans le cas d'une fréquence de commutation réduite dans le mode de fonctionnement en surcharge pour réduire des pertes de commutation dans le système convertisseur.

**10.** Procédé selon l'une quelconque des revendications précédentes, **caractérisé en ce que** le système convertisseur

- présente un premier jeu de paramètres, qui comprend des températures limites maximales ($T_{1,rel}$) des composants du système convertisseur et/ou une première valeur théorique de fréquence de commutation moyenne ($f_{sw,1}$) et/ou une première valeur théorique de distribution de puissance ($P_{théorique,1}$) dans le mode de fonctionnement normal, et
- présente un deuxième jeu de paramètres, qui comprend des températures limites maximales ($T_{2,max}$) des composants du système convertisseur et/ou une deuxième valeur théorique de fréquence de commutation moyenne ($f_{sw,2}$) et/ou une deuxième valeur théorique de distribution de puissance ($P_{théorique,2}$) dans le mode de fonctionnement en surcharge, dans lequel

les températures limites maximales sont plus importantes dans le mode de fonctionnement en surcharge que les températures limites maximales dans le mode de fonctionnement normal,
la valeur théorique de fréquence de commutation moyenne est plus petite dans le mode de fonctionnement en surcharge que la valeur théorique de fréquence de commutation moyenne dans le mode de fonctionnement normal, et
la première valeur théorique de distribution de puissance est plus importante que la deuxième valeur théorique de distribution de puissance ou est égale, et dans lequel

- lors de la commutation du système convertisseur dans le mode de fonctionnement en surcharge, une commutation du premier jeu de paramètres au deuxième jeu de paramètres est effectuée pour pouvoir faire fonctionner le système convertisseur brièvement avec les températures limites maximales plus importantes ($T_{2,max}$).

11. Procédé selon l'une quelconque des revendications précédentes, **caractérisé en ce que** le temps, pendant lequel le système convertisseur se trouve dans le mode de fonctionnement en surcharge, est enregistré pour pouvoir créer un historique de surcharge thermique pour le système convertisseur, dans lequel en particulier une valeur de surtempérature sur le temps est intégrée en une valeur intégrale de surcharge, dans lequel la surtempérature décrit une valeur de température, dépassant une température limite, d'un composant du système convertisseur.

12. Procédé selon l'une quelconque des revendications précédentes, **caractérisé en ce que** la fréquence est réduite lors du fonctionnement en surcharge de 50 %, de préférence de 75 %, en particulier de 90 % en comparaison avec le mode de fonctionnement normal.

13. Procédé selon l'une quelconque des revendications précédentes, **caractérisé en ce que** la mesure de courant et de tension renferme également une mesure de fréquence et d'amplitude du courant mesuré et de la tension mesurée.

14. Eolienne (100) pour échanger une puissance électrique avec un réseau d'alimentation électrique (120) sur un point de branchement au réseau (118), comprenant :

- un système convertisseur pour générer un courant électrique et/ou une tension électrique,
- un dispositif de commande pour commander le système convertisseur de telle sorte qu'il fonctionne dans un mode de fonctionnement normal ou dans un mode de fonctionnement en surcharge,
- des moyens de mesure pour détecter une situation de surcharge concernant le système convertisseur ; et
- un dispositif de commutation pour commuter entre le mode de fonctionnement normal et le mode de fonctionnement en surcharge quand une situation de surcharge a été détectée, dans lequel

le dispositif de commande est préparé pour faire fonctionner le système convertisseur dans le mode de fonctionnement en surcharge de telle sorte qu'une fréquence de commutation moyenne est réduite pour générer un courant de sortie par rapport au mode de fonctionnement normal, et
dans le mode de fonctionnement en surcharge du système convertisseur pendant une durée de surcharge maximale prédéfinie, une contrainte plus élevée est admise sur le système convertisseur, à savoir une température supérieure, et
que
la fréquence de commutation moyenne ($f_{sw}$) est réduite pendant la durée de surcharge maximale prédéfinie, dans lequel la durée de surcharge maximale est fixée en fonction d'une précontrainte thermique du système convertisseur ou en fonction d'une précontrainte thermique de composants du système convertisseur.

15. Eolienne selon la revendication 14, **caractérisée en ce que** l'éolienne, en particulier le dispositif de commande, est préparée pour exécuter un procédé selon l'une quelconque des revendications 1 - 13.

16. Eolienne selon l'une quelconque des revendications 14 ou 15, **caractérisée en ce que** le système convertisseur est élaboré à partir de transistors de puissance résistants en température, dans laquelle les transistors de puissance sont constitués d'un matériau semi-conducteur ou présentent au moins celui-ci, choisi parmi la liste présentant :

- Si,
- SiC,
- GaN et

- SiGE.

**17.** Eolienne selon l'une quelconque des revendications 14 à 16, **caractérisée en ce que** le système convertisseur

- présente un premier jeu de paramètres, qui comprend des températures limites maximales ($T_{1,rel}$) des composants du système convertisseur et/ou une première valeur théorique de fréquence de commutation moyenne ($f_{sw,1}$) et/ou une première valeur théorique de distribution de puissance ($P_{théorique,1}$) dans le mode de fonctionnement normal, et
- présente un deuxième jeu de paramètres, qui comprend des températures limites maximales ($T_{2,max}$) des composants du système convertisseur dans le mode de fonctionnement en surcharge et/ou une deuxième valeur théorique de fréquence de commutation moyenne ($f_{sw,2}$) et/ou une deuxième valeur théorique de distribution de puissance ($P_{théorique,2}$),

dans lequel les températures limites maximales ($T_{2,max}$) sont plus importantes dans le mode de fonctionnement en surcharge que les températures limites maximales ($T_{1,rel}$) dans le mode de fonctionnement normal, et dans lequel

la valeur théorique de fréquence de commutation moyenne ($f_{sw,2}$) est plus petite dans le mode de fonctionnement en surcharge que la valeur théorique de fréquence de commutation moyenne ($f_{sw,1}$) dans le mode de fonctionnement normal, et dans lequel

la première valeur théorique de distribution de puissance ($P_{théorique,1}$) est plus importante que la deuxième valeur théorique de distribution de puissance ($P_{théorique,2}$) ou est égale, et dans lequel

- l'éolienne, en particulier le dispositif de commande et/ou le moyen de commutation, sont préparés pour que lors de la commutation du système convertisseur dans le mode de fonctionnement en surcharge, une commutation du premier jeu de paramètres au deuxième jeu de paramètres est effectuée pour pouvoir faire fonctionner le système convertisseur brièvement avec les températures limites maximales ($T_{2,max}$) plus importantes.

**18.** Parc éolien (112) avec plusieurs éoliennes (100), **caractérisé en ce qu'**au moins une des éoliennes est réalisée selon l'une quelconque des revendications 14 à 17.

Fig. 1

Fig. 2

Fig. 3

Fig. 4

A)

$P/P_{N,max}$

1,1

1

OL1

OL2

$t_1$    $t_2$    t

B)

$f_{sw}$

1

0,5

OL1    OL2

$t_1$    $t_2$    t

C)

$T_{krit}$

$T_{2,max}$

$T_{1,rel}$

$A_T$

$T_M$

$t_1$    $t_2$    t

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006027465 A1
- DE 102008003299 A1
- US 20130026841 A1
- WO 2010079235 A2
- CN 104578821 A
- WO 2005027301 A1
- US 2015138852 A1
- EP 1107416 A1
- EP 2530816 A2